# EUROPEAN PATENT APPLICATION

(11) **EP 4 246 640 A1**
(43) Date of publication of application: **20.09.2023**
(21) Application number: 23160977.7
(22) Date of filing: 09.03.2023
(51) Int. Cl.: H01M 10/0525, H01M 10/056, H01M 10/0568, H01M 10/0569, H01M 4/62

(54) **LITHIUM ION CONDUCTING MATERIAL AND LITHIUM ION SECONDARY BATTERY**

(30) Priority: 18.03.2022 JP 2022044675
(71) Applicant: TOYOTA JIDOSHA KABUSHIKI KAISHA, Aichi-Ken 471-8571 (JP)
(72) Inventor: NAKAMOTO, Hirofumi, Toyota-shi, 471-8571 (JP)
(74) Representative: J A Kemp LLP

(57) **Abstract**

Disclosed is a lithium ion conducting material having excellent lithium ion conductive properties and thermal stability. The lithium ion conducting material of the present disclosure comprises a cyclic carbonate as a solvent and a lithium amide salt dissolved in the cyclic carbonate, wherein a molar ratio of the lithium amide salt to the cyclic carbonate is greater than 0.25 and 0.33 or less.

## Description

### FIELD

The present application discloses a lithium ion conducting material and a lithium ion secondary battery.

### BACKGROUND

PTL 1 discloses an electrolytic solution for lithium ion secondary batteries, containing a predetermined solvent, a lithium imide salt, and at least one element of Group 1 elements and Group 2 elements, wherein a molar ratio of the lithium imide salt to the solvent is 0.8 or greater and 2 or less. PTL 2 discloses a nonaqueous electrolytic solution, wherein a ratio of oxygen to lithium contained in the nonaqueous electrolytic solution is within a predetermined range. PTL 3 discloses an electrolytic solution for lithium ion secondary batteries, comprising a nonaqueous solvent and a lithium salt, wherein the nonaqueous solvent is contained in an amount of 3 mol or less per mol of the lithium salt. PTL 4 discloses an electrolytic solution, comprising a chain carbonate, an unsaturated cyclic carbonate, and a lithium salt, wherein the lithium salt is contained at a concentration of 1.1 to 3.8 mol/L.

### [CITATION LIST]

### [PATENT LITERATURE]

[PTL 1] Japanese Unexamined Patent Publication No. 2019-096463
[PTL 2] Japanese Unexamined Patent Publication No. 2020-053171
[PTL 3] Japanese Unexamined Patent Publication No. 2016-122657
[PTL 4] WO 2017/179682

### SUMMARY

### [TECHNICAL PROBLEM]

There is a room for improvement on the conventional lithium ion conducting materials in terms of lithium ion conductive properties and thermal stability.

### [SOLUTION TO PROBLEM]

As a means for solving the above problem, the present application discloses
a lithium ion conducting material, comprising
a cyclic carbonate as a solvent, and
a lithium amide salt dissolved in the cyclic carbonate, wherein
a molar ratio of the lithium amide salt to the cyclic carbonate is greater than 0.25 and 0.33 or less.

In the lithium ion conducting material of the present disclosure, the cyclic carbonate may be at least one of propylene carbonate and ethylene carbonate.

In the lithium ion conducting material of the present disclosure, the lithium amide salt may be at least one of lithium bisfluorosulfonylamide and lithium bistrifluoromethanesulfonylamide.

The lithium ion conducting material of the present disclosure may comprise a sulfide solid electrolyte, in addition to the cyclic carbonate and the lithium amide salt.

As a means for solving the above problem, the present application discloses
a lithium ion secondary battery, comprising a positive electrode, an electrolyte layer, and a negative electrode, wherein
at least one of the positive electrode, the electrolyte layer, and the negative electrode comprises the above lithium ion conducting material of the present disclosure.

### [ADVANTAGEOUS EFFECTS]

The lithium ion conducting material of the present disclosure has excellent lithium ion conductive properties and thermal stability.

### BRIEF DESCRIPTION OF DRAWINGS

FIG. 1 schematically shows a configuration of a secondary battery.
FIG. 2 shows results of lithium ion conducting materials evaluated for thermal stability.
FIG. 3 shows results of lithium ion conducting materials evaluated for lithium ion transference number.
FIG. 4 shows results of lithium ion conducting materials evaluated for lithium ion conductivity.
FIG. 5 shows X-ray diffraction peaks of a sulfide solid electrolyte before and after immersion in each lithium ion conducting material.

### DESCRIPTION OF EMBODIMENTS

### 1. Lithium ion conducting material

The lithium ion conducting material of the present disclosure comprises a cyclic carbonate as a solvent and a lithium amide salt dissolved in the cyclic carbonate. In the lithium ion conducting material of the present disclosure, a molar ratio of the lithium amide salt to the cyclic carbonate is greater than 0.25 and 0.33 or less.

### 1.1 Solvent

The lithium ion conducting material of the present disclosure comprises a cyclic carbonate as the solvent. The solvent may substantially consist of a cyclic carbonate only, or may be a mixed solvent of a cyclic carbonate and a solvent other than a cyclic carbonate.

### 1.1.1 Cyclic carbonate

According to the findings of the present inventors, cyclic carbonates have a higher dielectric constant than chain carbonates and easily coordinate lithium ions. In other words, in the lithium ion conducting material of the present disclosure, a cyclic carbonate does not easily enter into a free state, and consequently, thermal stability easily increases. Particularly, when a lithium amide salt is dissolved in the cyclic carbonate at a predetermined concentration, nearly all of the cyclic carbonate can be solvated with the lithium ions, and as a result, thermal stability can be further improved. In addition, a small amount of lithium ions that are not solvated with the cyclic carbonate increases the transference number of lithium ions even under high viscosity, and excellent lithium ion conductive properties are easily ensured.

The cyclic carbonate is not limited as long as it includes a cyclic structure as the chemical structure, it is a liquid at a temperature at which lithium ion conductive properties are desired to be exhibited, and it is capable of dissolving a lithium amide salt at a predetermined concentration. Specific examples of the cyclic carbonate include propylene carbonate (PC), ethylene carbonate (EC), butylene carbonate (BC), vinylene carbonate (VC), and derivatives thereof (for example, halides). Particularly, when the cyclic carbonate is at least one of propylene carbonate and ethylene carbonate, more excellent lithium ion conductive properties and thermal stability are easily ensured. One type of cyclic carbonate may be used alone, or two or more types thereof may be used in combination.

### 1.1.2 Solvent (auxiliary solvent) other than cyclic carbonate

The solvent constituting the lithium ion conducting material of the present disclosure may consist of the above cyclic carbonate, or may comprise a solvent (auxiliary solvent) other than a cyclic carbonate in addition to the above cyclic carbonate. Examples of the auxiliary solvent other than a cyclic carbonate include a chain carbonate. Examples of the chain carbonate include dimethyl carbonate (DMC), diethyl carbonate (DEC), and derivatives thereof (for example, halides, particularly ones having a perfluoroalkyl group). However, chain carbonates have a lower dielectric constant compared to cyclic carbonates and do not tend to coordinate lithium ions easily. Therefore, in the lithium ion conducting material, a chain carbonate easily enters into a free state by itself, easily volatilizes, and is likely to have high reactivity with a sulfide solid electrolyte, which will be described below. In the lithium ion conducting material of the present disclosure, when there is a small amount of auxiliary solvent other than a cyclic carbonate, high thermal stability is easily ensured, and ionic conductivity is easily improved while reactivity with a sulfide solid electrolyte is suppressed. In the lithium ion conducting material of the present disclosure, the molar ratio of the auxiliary solvent to the cyclic carbonate ([auxiliary solvent (mol)]/[cyclic carbonate (mol)]) may be 0.10 or less, 0.05 or less, or 0.03 or less. The lower limit of the molar ratio of the auxiliary solvent to the cyclic carbonate is 0.

### 1.2 Lithium salt

The lithium ion conducting material of the present disclosure comprises a lithium salt dissolved in the above solvent. The lithium salt may substantially consist of a lithium amide salt only, or may consist of a combination of a lithium amide salt and a lithium salt other than a lithium amide salt.

### 1.2.1 Lithium amide salt

The lithium ion conducting material of the present disclosure comprises a lithium amide salt dissolved in the above cyclic carbonate. Specifically, the lithium amide salt may be dissolved in the cyclic carbonate and ionized into cations and anions, or may form association units with the cyclic carbonate. The molar ratio of the lithium amide salt to the cyclic carbonate ([lithium amide salt (mol)]/[cyclic carbonate (mol)]) is greater than 0.25 and 0.33 or less. In other words, the lithium amide salt is dissolved at a concentration of more than 0.25 mol and 0.33 mol or less per mol of cyclic carbonate.

Various amide salts can be adopted as the lithium amide salt. In the lithium ion conducting material of the present disclosure, it is considered that lithium ions can be coordinated to active sites of the cyclic carbonate regardless of the type of lithium amide salt, and excellent thermal stability and lithium ion conductive properties can be ensured. Specific examples of the lithium amide salt include sulfonylamide salts such as lithium bisfluorosulfonylamide (LiFSA, LiN(SO₂F)₂), lithium bistrifluoromethanesulfonylamide (LiTFSA, Li[N(CF₃SO₂)₂]), lithium bisperfluoroethylsulfonylamide (Li[N(C₂F₅SO₂)₂]), lithium bisperfluorobutylsulfonylamide (Li[N(C₄F₉SO₂)₂]), and lithium fluorosulfonyltrifluoromethanesulfonylamide (Li[N(FSO₂)(C₂F₅SO₂)]). Alternatively, silylamide salts having Si in place of S may be adopted. Particularly, when the lithium amide salt is at least one of lithium bisfluorosulfonylamide (LiFSA, LiN(SO₂F)₂) and lithium bistrifluoromethanesulfonylamide (LiTFSA, Li[N(CF₃SO₂)₂]), more excellent lithium ion conductive properties and thermal stability are easily ensured, and reactivity with the sulfide solid electrolyte described below is more easily decreased. One type of lithium amide salt may be used alone, or two or more types thereof may be used in combination. Note that, "amide salt" is a concept which also includes "imide salt".

As described above, the molar ratio of the lithium amide salt to the cyclic carbonate is greater than 0.25 and 0.33 or less. When the concentration of lithium amide salt in the cyclic carbonate is in this range, thermal stability and lithium ion conductive properties are likely to be remarkably improved. Further, reactions between active sites of the cyclic carbonate and the sulfide solid electrolyte described below are suppressed, and deterioration of the sulfide solid electrolyte is easily inhibited. When the concentration of lithium amide salt with respect to the cyclic carbonate is too low, thermal stability and lithium ion conductive properties do not easily improve. When the concentration of lithium amide salt with respect to the cyclic carbonate is excessive, viscosity becomes too high, and there is a risk of deterioration of the lithium ion conductive properties. The molar ratio may be 0.26 or greater, 0.27 or greater, or 0.28 or greater, and may be 0.32 or less, 0.31 or less, or 0.30 or less. The molar ratio of the lithium amide salt to the cyclic carbonate can be specified by analyzing the ions and elements contained in the cyclic carbonate.

### 1.2.2 Lithium salt other than lithium amide salt

In the lithium ion conducting material of the present disclosure, the lithium salt dissolved in the solvent may consist of the above lithium amide salt, or may be a combination of the above lithium amide salt and a lithium salt (additional lithium salt) other than a lithium amide salt. In either case, as long as the lithium amide salt is dissolved at a predetermined concentration with respect to the cyclic carbonate, excellent thermal stability and ion conductive properties are easily ensured. However, according to the findings of the present inventors, some lithium salts other than lithium amide salts have reactivity with the sulfide solid electrolyte described below. For example, if the molecular weight of anions constituting a lithium salt is too low, charge density becomes too high (electron donicity is too high), and the sulfide solid electrolyte is deprived of Li, which can deteriorate the sulfide solid electrolyte. Such a problem is less likely to occur in lithium amide salts. Thus, in the lithium ion conducting material of the present disclosure, it is preferred that the ratio of a lithium amide salt in the lithium salts dissolved in the solvent be higher. Specifically, the ratio of the lithium amide salt in all (100 mol%) of the lithium salts may be 50 mol% or greater, 60 mol% or greater, 70 mol% or greater, 80 mol% or greater, 90 mol% or greater, 95 mol% or greater, or 99 mol% or greater.

### 1.3 Optional components

The lithium ion conducting material of the present disclosure may comprise additional components, in addition to the cyclic carbonate and lithium amide salt described above. Examples of the additional components include the auxiliary solvent and the additional lithium salt described above. Further, the lithium ion conducting material of the present disclosure may be a combination of a liquid material (for example, an electrolytic solution) and a solid material (for example, a solid electrolyte). The cyclic carbonate and lithium amide salt described above can be an electrolytic solution.

### 1.3.1 Sulfide solid electrolyte

The lithium ion conducting material of the present disclosure may be a combination of the above cyclic carbonate and lithium amide salt and a sulfide solid electrolyte. Specifically, the lithium ion conducting material of the present disclosure may comprise a sulfide solid electrolyte, in addition to the cyclic carbonate and the lithium amide salt. According to such a combination, for example, gaps between sulfide solid electrolytes can be filled by the electrolytic solution of cyclic carbonate and lithium amide salt. That is, ion-conducting paths can be formed in the gap spaces within the sulfide solid electrolyte. Further, the cyclic carbonate functions as a lubricant that improves the fluidity of the sulfide solid electrolyte, and an effect of improving moldability of the sulfide solid electrolyte can be expected.

When the above cyclic carbonate and lithium amide salt are combined with the sulfide solid electrolyte, it is preferred that reactions of the cyclic carbonate and lithium amide salt with the sulfide solid electrolyte be suppressed. For example, an anion having low reactivity with the sulfide solid electrolyte may be adopted as the anion constituting the lithium amide salt. Specifically, for the lithium ion conducting material of the present disclosure when comprising a sulfide solid electrolyte together with the cyclic carbonate and the lithium amide salt, the lithium amide salt may be at least one of lithium bisfluorosulfonylamide (LiFSA) and lithium bistrifluoromethanesulfonylamide (LiTFSA).

Any sulfide having lithium ion conductive properties may be used as the sulfide solid electrolyte. The sulfide solid electrolyte may comprise at least Li and S as constituent elements. Particularly, sulfide solid electrolytes comprising at least Li, S, and P as constituent elements have high performance, and sulfide solid electrolytes based on a Li₃PS₄ framework and comprising at least one halogen also have high performance. Examples of the sulfide solid electrolyte include Li₂S-P₂S₅, Li₂S-SiS₂, LiI-Li₂S-SiS₂, LiI-Si₂S-P₂S₅, Li₂S-P₂S₅-LiI-LiBr, LiI-Li₂S-P₂S₅, LiI-Li₂S-P₂O₅, LiI-Li₃PO₄-P₂S₅, and Li₂S-P₂S₅-GeS₂. The sulfide solid electrolyte may be amorphous or crystalline. The sulfide solid electrolyte may be, for example, particulate. One type of sulfide solid electrolyte may be used alone, or two or more types thereof may be used in combination.

### 1.3.2 Various additives

The lithium ion conducting material of the present disclosure may comprise various additives, in addition to the above components. The type of additive can be selected according to the application of the lithium ion conducting material.

### 2. Lithium ion secondary battery

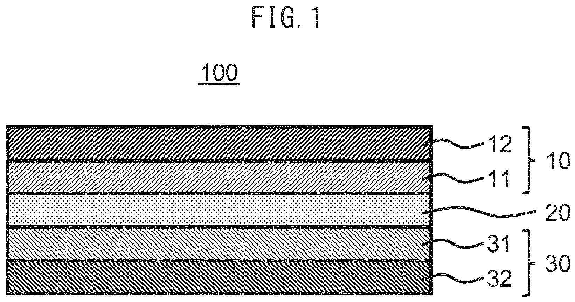

The lithium ion conducting material of the present disclosure is used, for example, as an electrolytic material for lithium ion secondary batteries. Hereinafter, a lithium ion secondary battery comprising the lithium ion conducting material of the present disclosure will be described. As shown in FIG. 1, the lithium ion secondary battery 100 according to one embodiment comprises a positive electrode 10, an electrolyte layer 20, and a negative electrode 30. At least one of the positive electrode 10, the electrolyte layer 20, and the negative electrode 30 comprises the above lithium ion conducting material of the present disclosure. As described above, the lithium ion conducting material of the present disclosure has excellent thermal stability and lithium ion conductive properties. In this regard, by including the lithium ion conducting material of the present disclosure in at least one of the positive electrode 10, the electrolyte layer 20, and the negative electrode 30 of the secondary battery 100, the performance of the secondary battery 100 is easily enhanced. Note that, in the secondary battery 100, the above lithium ion conducting material of the present disclosure may be used as an electrolytic solution or may be used in combination with a solid electrolyte (particularly a sulfide solid electrolyte). Specifically, the secondary battery 100 may be an electrolytic solution battery not comprising any solid electrolyte, or may contain a solid electrolyte and a liquid.

### 2.1 Positive electrode

As shown in FIG. 1, the positive electrode 10 according to one embodiment may comprise a positive electrode active material layer 11 and a positive electrode current collector 12. In this case, the positive electrode active material layer 11 may comprise the above lithium ion conducting material.

### 2.1.1 Positive electrode active material layer

The positive electrode active material layer 11 comprises a positive electrode active material, and may optionally comprise an electrolyte, a conductive aid, and a binder. Further, the positive electrode active material layer 11 may additionally comprise various additives. When the positive electrode active material layer 11 comprises the above lithium ion conducting material of the present disclosure, the positive electrode active material layer 11 comprises a positive electrode active material in addition to the lithium ion conducting material, and may optionally comprise an additional electrolyte, a conductive aid, a binder, and various additives. The content of each of the positive electrode active material, electrolyte, conductive aid, and binder in the positive electrode active material layer 11 may be appropriately determined according to the target performance of a battery. For example, the content of the positive electrode active material to the entire positive electrode active material layer 11 (total solid content) as 100% by mass may be 40% by mass or greater, 50% by mass or greater, or 60% by mass or greater, and may be less than 100% by mass or 90% by mass or less. The shape of the positive electrode active material layer 11 is not particularly limited, and may be, for example, a sheet having a substantially flat surface. The thickness of the positive electrode active material layer 11 is not particularly limited, and may be, for example, 0.1 µm or more, 1 µm or more, 10 µm or more, or 30 µm or more, and may be 2 mm or less, 1 mm or less, 500 µm or less, or 100 µm or less.

Any known positive electrode active material for secondary batteries may be used as the positive electrode active material. Of known active materials, materials exhibiting a potential (charge/discharge potential) at which lithium ions are stored and released that is more electropositive than that of the negative electrode active material described below can be used as the positive electrode active material. For example, various lithium-containing composite oxides, such as lithium cobalt oxide, lithium nickel oxide, lithium manganese oxide, lithium manganese-nickel-cobalt oxide, and lithium spinel compounds, may be used. One type of positive electrode active material may be used alone, or two or more types thereof may be used in combination. The positive electrode active material may be, for example, particulate, and the size thereof is not particularly limited. The particle of the positive electrode active material may be a solid particle or a hollow particle. The particle of the positive electrode active material may be a primary particle or a secondary particle of a plurality of agglomerated primary particles. The average particle diameter (D50) of the particles of the positive electrode active material may be, for example, 1 nm or more, 5 nm or more, or 10 nm or more, and may be 500 µm or less, 100 µm or less, 50 µm or less, or 30 µm or less. It should be noted that the average particle diameter D50 is the particle diameter (median size) at an integrated value of 50% in a volume-based particle diameter distribution obtained by the laser diffraction/scattering method.

The surface of the positive electrode active material may be covered by a protective layer containing a lithium ion conductive oxide. Specifically, a composite comprising the above positive electrode active material and a protective layer provided on the surface thereof may be contained in the positive electrode active material layer 11, whereby a reaction between the positive electrode active material and a sulfide (for example, the sulfide solid electrolyte described above) can be easily suppressed. Examples of the lithium ion conductive oxide include Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, and Li₂WO₄. The coverage (area ratio) of the protective layer may be, for example, 70% or greater, 80% or greater, or 90% or greater. The thickness of the protective layer may be, for example, 0.1 nm or more or 1 nm or more, and may be 100 nm or less or 20 nm or less.

The electrolyte that can be contained in the positive electrode active material layer 11 may be a solid electrolyte, a liquid electrolyte (electrolytic solution), or a combination thereof.

Any known solid electrolyte for secondary batteries may be used as the solid electrolyte. The solid electrolyte may be an inorganic solid electrolyte or an organic polymer electrolyte. Particularly, an inorganic solid electrolyte has excellent ion conductive properties and heat resistance. Other than the sulfide solid electrolyte described above, oxide solid electrolytes such as lithium lanthanum zirconate, LiPON, Li₁₊ₓAlₓGe₂₋ₓ(PO₄)₃, Li-SiO-based glass, and Li-Al-SO-based glass can be exemplified as the inorganic solid electrolyte. Sulfide solid electrolytes, particularly sulfide solid electrolytes comprising at least Li, S, and P as constituent elements, have high performance, and sulfide solid electrolytes based on a Li₃PS₄ framework and comprising at least one halogen also have high performance. The solid electrolyte may be amorphous or crystalline. The solid electrolyte may be, for example, particulate. One type of solid electrolyte may be used alone, or two or more types thereof may be used in combination.

The electrolytic solution may comprise, for example, a lithium ion as the carrier ion. The electrolytic solution may be, for example, a nonaqueous electrolytic solution. For example, a lithium salt dissolved in a carbonate-based solvent at a predetermined concentration can be used as the electrolytic solution. As described above, specific examples thereof include the electrolytic solution in which a lithium amide salt is dissolved in a cyclic carbonate at a predetermined concentration.

Examples of the conductive aid that can be contained in the positive electrode active material layer 11 include carbon materials such as vapor-grown carbon fibers (VGCF), acetylene black (AB), Ketjen black (KB), carbon nanotubes (CNT), and carbon nanofibers (CNF); and metal materials such as nickel, aluminum, and stainless steel. The conductive aid may be, for example, particulate or fibrous, and the size thereof is not particularly limited. One type of conductive aid may be used alone, or two or more types thereof may be used in combination.

Examples of the binder that can be contained in the positive electrode active material layer 11 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders, and polyacrylic acid-based binders. One type of binder may be used alone, or two or more types thereof may be used in combination.

### 2.1.2 Positive electrode current collector

As shown in FIG. 1, the positive electrode 10 may comprise a positive electrode current collector 12 in contact with the above positive electrode active material layer 11. Any material generally used as a positive electrode current collector for batteries can be adopted as the positive electrode current collector 12. In addition, the positive electrode current collector 12 may be in the form of a foil, a plate, a mesh, a perforated (punched) metal, or a foam body. The positive electrode current collector 12 may be comprised of a metal foil or a metal mesh. Particularly, a metal foil has excellent handleability. The positive electrode current collector 12 may be formed of a plurality of foils. Examples of the metal constituting the positive electrode current collector 12 include Cu, Ni, Cr, Au, Pt, Ag, Al, Fe, Ti, Zn, Co, and stainless steel. Particularly, from the viewpoint of ensuring oxidation resistance, the positive electrode current collector 12 may comprise Al. For the purpose of adjusting resistance and etc., the surface of the positive electrode current collector 12 may have some coating layer. Further, the above metals may be plated or vapor-deposited onto a metal foil or a substrate for the positive electrode current collector 12. When the positive electrode current collector 12 comprises a plurality of metal foils, some layer may be included between the plurality of metal foils. The thickness of the positive electrode current collector 12 is not particularly limited. The thickness may be, for example, 0.1 µm or more or 1 µm or more, and may be 1 mm or less or 100 µm or less.

In addition to the above configuration, the positive electrode 10 may be provided with any configuration generally used for a positive electrode of a secondary battery, for example, a tab or a terminal. The positive electrode 10 can be manufactured by applying a known method. For example, the positive electrode active material layer 11 can be easily formed by dry- or wet-molding a positive electrode mixture containing the various components above. The positive electrode active material layer 11 may be molded together with the positive electrode current collector 12 or separately from the positive electrode current collector 12.

### 2.2 Electrolyte layer

The electrolyte layer 20 comprises at least an electrolyte. The electrolyte layer 20 may comprise a solid electrolyte or an electrolytic solution, and may optionally comprise a binder. When the electrolyte layer 20 comprises the above lithium ion conducting material of the present disclosure, the electrolyte layer 20 may further comprise an additional electrolyte, a binder, and various additives in addition to the lithium ion conducting material. In this case, the contents of the solid electrolyte and binder in the electrolyte layer 20 are not particularly limited. Alternatively, the electrolyte layer 20 may comprise the above lithium ion conducting material of the present disclosure as the electrolytic solution, and may further include a separator for retaining the electrolytic solution and preventing contact between the positive electrode active material layer 11 and the negative electrode active material layer 31. The thickness of the electrolyte layer 20 is not particularly limited, and may be, for example, 0.1 µm or more or 1 µm or more, and may be 2 mm or less or 1 mm or less.

The electrolyte contained in the electrolyte layer 20 may be appropriately selected from the electrolyte (electrolytic solution and/or sulfide solid electrolyte) constituting the above lithium ion conducting material of the present disclosure or the electrolytes exemplified as an electrolyte that can be contained in the positive electrode active material layer described above. The binder that can be contained in the electrolyte layer 20 may also be appropriately selected from the binders exemplified as a binder that can be contained in the positive electrode active material layer described above. For each of the electrolyte and the binder, one type may be used alone, or two or more types may be used in combination. The separator may be a separator commonly used in lithium ion secondary batteries. Examples thereof include separators made of resins such as polyethylene (PE), polypropylene (PP), polyester, and polyamide. The separator may be of a single-layer structure or a multilayer structure. Examples of a separator having a multilayer structure include separators having a two-layer structure such as PE/PP and separators having a three-layer structure such as PP/PE/PP and PE/PP/PE. The separator may be formed of a nonwoven fabric such as a cellulose nonwoven fabric, a resin nonwoven fabric, or a glass fiber nonwoven fabric.

### 2.3 Negative electrode

As shown in FIG. 1, the negative electrode 30 according to one embodiment may comprise a negative electrode active material layer 31 and a negative electrode current collector 32. In this case, the negative electrode active material layer 31 may comprise the above lithium ion conducting material.

### 2.3.1 Negative electrode active material layer

The negative electrode active material layer 31 comprises a negative electrode active material, and may optionally comprise an electrolyte, a conductive aid, and a binder. Further, the negative electrode active material layer 31 may additionally comprise various additives. When the negative electrode active material layer 31 comprises the above lithium ion conducting material of the present disclosure, the negative electrode active material layer 31 comprises a negative electrode active material in addition to the lithium ion conducting material, and may optionally comprise an additional electrolyte, a conductive aid, a binder, and various additives. The content of each of the negative electrode active material, electrolyte, conductive aid, and binder in the negative electrode active material layer 31 may be appropriately determined according to the target performance of a battery. For example, the content of the negative electrode active material to the entire negative electrode active material layer 31 (total solid content) as 100% by mass may be 40% by mass or greater, 50% by mass or greater, or 60% by mass or greater, and may be less than 100% by mass or 90% by mass or less. The shape of the negative electrode active material layer 31 is not particularly limited, and may be, for example, a sheet having a substantially flat surface. The thickness of the negative electrode active material layer 31 is not particularly limited, and may be, for example, 0.1 µm or more, 1 µm or more, 10 µm or more, or 30 µm or more, and may be 2 mm or less, 1 mm or less, 500 µm or less, or 100 µm or less.

Various materials having a potential (charge/discharge potential) at which lithium ions are stored and released that is more electronegative than that of the above positive electrode active material can be adopted as the negative electrode active material. For example, silicon-based active materials such as Si, Si alloys, and silicon oxides; carbon-based active materials such as graphite and hard carbon; various oxide-based active materials such as lithium titanate; and metallic lithium and lithium alloys can be adopted. One type of negative electrode active material may be used alone, or two or more types thereof may be used in combination. The shape of the negative electrode active material may be any general shape for a negative electrode active material in secondary batteries. For example, the negative electrode active material may be particulate. The negative electrode active material particle may be a primary particle or a secondary particle of a plurality of agglomerated primary particles. The average particle diameter (D50) of the negative electrode active material particle may be, for example, 1 nm or more, 5 nm or more, or 10 nm or more, and may be 500 µm or less, 100 µm or less, 50 µm or less, or 30 µm or less. Alternatively, the negative electrode active material may be in the form of a sheet (foil or film), such as a lithium foil. Specifically, the negative electrode active material layer 31 may consist of a negative electrode active material sheet.

Examples of an electrolyte that can be contained in the negative electrode active material layer 31 include the solid electrolyte and electrolytic solution described above and a combination thereof. Examples of a conductive aid that can be contained in the negative electrode active material layer 31 include the carbon-based materials described above and the metal materials described above. A binder that can be contained in the negative electrode active material layer 31 may be appropriately selected from, for example, binders exemplified as a binder that can be contained in the positive electrode active material layer 11 described above. For each of the electrolyte, the conductive aid and the binder, one type may be used alone, or two or more types may be used in combination.

### 2.3.2 Negative electrode current collector

As shown in FIG. 1, the negative electrode 30 may comprise a negative electrode current collector 32 in contact with the above negative electrode active material layer 31. Any material generally used as a negative electrode current collector for batteries can be adopted as the negative electrode current collector 32. In addition, the negative electrode current collector 32 may be in the form of a foil, a plate, a mesh, a perforated (punched) metal, or a foam body. The negative electrode current collector 32 may be a metal foil or a metal mesh, and may alternatively be a carbon sheet. Particularly, a metal foil has excellent handleability. The negative electrode current collector 32 may be formed of a plurality of foils or sheets. Examples of the metal constituting the negative electrode current collector 32 include Cu, Ni, Cr, Au, Pt, Ag, Al, Fe, Ti, Zn, Co, and stainless steel. Particularly, from the viewpoint of ensuring reduction resistance and making alloying with lithium difficult, the negative electrode current collector 32 may comprise at least one metal selected from Cu, Ni, and stainless steel. For the purpose of adjusting resistance and etc., the surface of the negative electrode current collector 32 may have some coating layer. Further, the above metals may be plated or vapor-deposited onto a metal foil or a substrate for the negative electrode current collector 32. When the negative electrode current collector 32 comprises a plurality of metal foils, some layer may be included between the plurality of metal foils. The thickness of the negative electrode current collector 32 is not particularly limited. The thickness may be, for example, 0.1 µm or more or 1 µm or more, and may be 1 mm or less or 100 µm or less.

In addition to the above configuration, the negative electrode 30 may be provided with any configuration generally used for a negative electrode of a secondary battery, for example, a tab or a terminal. The negative electrode 30 can be manufactured by applying a known method. For example, the negative electrode active material layer 31 can be easily formed by dry- or wet-molding a negative electrode mixture containing the various components above. The negative electrode active material layer 31 may be molded together with the negative electrode current collector 32 or separately from the negative electrode current collector 32.

### 2.4 Additional features

The lithium ion secondary battery 100 may be a battery in which each of the above components is housed inside an outer packaging. Any known outer packaging for batteries can be adopted as the outer packaging. In addition, a plurality of secondary batteries 100 may be optionally electrically connected and optionally stacked to form a battery pack. In this case, the battery pack may be housed inside a known battery case. The secondary battery 100 may additionally comprise obvious components such as the necessary terminals. Examples of a shape of the secondary battery 100 may include a coin, a laminate, a cylinder, and a rectangle.

The lithium ion secondary battery 100 can be manufactured by applying a known method, for example, the following method. However, the method for manufacturing the secondary battery 100 is not limited to the following method, and each layer may be formed by, for example, dry molding.
(1) A positive electrode active material constituting a positive electrode active material layer is dispersed in a solvent to obtain a positive electrode layer slurry. The solvent used in this case is not particularly limited. Water and various organic solvents can be used, and the solvent may be N-methylpyrrolidone (NMP). The positive electrode layer slurry is applied to a surface of a positive electrode current collector using a doctor blade and then dried to form a positive electrode active material layer on the surface of the positive electrode current collector to obtain a positive electrode.
(2) A negative electrode active material constituting a negative electrode active material layer is dispersed in a solvent to obtain a negative electrode layer slurry. The solvent used in this case is not particularly limited. Water and various organic solvents can be used, and the solvent may be N-methylpyrrolidone (NMP). The negative electrode layer slurry is applied to a surface of a negative electrode current collector using a doctor blade and then dried to form a negative electrode active material layer on the surface of the negative electrode current collector to obtain a negative electrode.
(3) The layers are laminated such that an electrolyte layer (solid electrolyte layer or separator) is interposed between the negative electrode and the positive electrode, in the order of negative electrode current collector, negative electrode active material layer, electrolyte layer, positive electrode active material layer, and positive electrode current collector, to obtain a laminated body. Additional members such as terminals are attached to the laminated body as needed.
(4) The laminated body is housed in a battery case. In the case of an electrolytic solution battery, the battery case is filled with an electrolytic solution, the laminated body is immersed in the electrolytic solution, and the laminated body is sealed in the battery case to obtain a secondary battery. In the case of a battery comprising an electrolytic solution, the electrolytic solution may be included in the negative electrode active material layer, the separator, and the positive electrode active material layer in the above step (3).

### EXAMPLES

Hereinafter, the technique of the present disclosure will be described in detail with references to the Examples. However, the technique of the present disclosure is not limited to the following Examples.

### 1. Production of lithium ion conducting material

### 1.1 Example 1

Propylene carbonate (PC, manufactured by Kishida Chemical Co., Ltd.) as the solvent and lithium bisfluorosulfonylamide (LiFSA, manufactured by Kishida Chemical Co., Ltd.) as the lithium salt were each weighed to obtain a molar ratio of LiFSA to PC of 0.33 (PC:LiFSA = 3:1), and then mixed and stirred to obtain a lithium ion conducting material for evaluation.

### 1.2 Example 2

PC and LiFSA were each weighed to obtain a molar ratio of LiFSA to PC of 0.29 (PC:LiFSA = 3.5: 1), and then mixed and stirred to obtain a lithium ion conducting material for evaluation.

### 1.3 Example 3

PC and LiFSA were each weighed to obtain a molar ratio of LiFSA to PC of 0.26 (PC:LiFSA = 3.8: 1), and then mixed and stirred to obtain a lithium ion conducting material for evaluation.

### 1.4 Example 4

Except that lithium bistrifluoromethanesulfonylamide (LiTFSA, manufactured by Kishida Chemical Co., Ltd.) was used in place of LiFSA, a lithium ion conducting material for evaluation was obtained in the same manner as in Example 1.

### 1.5 Example 5

Except that LiTFSA was used in place of LiFSA, a lithium ion conducting material for evaluation was obtained in the same manner as in Example 2.

### 1.6 Example 6

Except that LiTFSA was used in place of LiFSA, a lithium ion conducting material for evaluation was obtained in the same manner as in Example 3.

### 1.7 Example 7

Except that a mixed solvent of PC and ethylene carbonate (EC, manufactured by Kishida Chemical Co., Ltd.) (mixed to obtain a molar ratio of PC to EC (PC:EC) = 1:2) was used in place of the PC-only solvent, a lithium ion conducting material for evaluation was obtained in the same manner as in Example 1.

### 1.8 Comparative Example 1

PC and LiFSA were each weighed to obtain a molar ratio of LiFSA to PC of 0.08 (PC:LiFSA = 11.8:1), and then mixed and stirred to obtain a lithium ion conducting material for evaluation.

### 1.9 Comparative Example 2

PC and LiFSA were each weighed to obtain a molar ratio of LiFSA to PC of 0.25 (PC:LiFSA = 4:1), and then mixed and stirred to obtain a lithium ion conducting material for evaluation.

### 1.10 Comparative Example 3

Except that LiTFSA was used in place of LiFSA, a lithium ion conducting material for evaluation was obtained in the same manner as in Comparative Example 1.

### 1.11 Comparative Example 4

Except that LiTFSA was used in place of LiFSA, a lithium ion conducting material for evaluation was obtained in the same manner as in Comparative Example 2.

### 1.12 Comparative Example 5

Except that dimethyl carbonate (DMC, manufactured by Kishida Chemical Co., Ltd.) was used in place of PC, a lithium ion conducting material for evaluation was obtained in the same manner as in Example 1.

1.13 Comparative Example 6

Except that a mixed solvent of DMC and EC (mixed to obtain a molar ratio of DMC to EC (DMC:EC) = 1:2) was used in place of the PC-only solvent, a lithium ion conducting material for evaluation was obtained in the same manner as in Example 1. In the lithium ion conducting material of Comparative Example 6, the molar ratio of LiFSA to EC was 0.50 (EC:LiFSA = 2:1).

### 1.14 Comparative Example 7

Except that lithium hexafluorophosphate (LiPF₆, manufactured by Kishida Chemical Co., Ltd.) was used in place of LiFSA, a lithium ion conducting material for evaluation was obtained in the same manner as in Example 1.

### 1.15 Comparative Example 8

Tetraglyme (G4, manufactured by Kishida Chemical Co., Ltd.) as the solvent and LiTFSA were each weighed to obtain a molar ratio of LiTFSA to G4 of 1.25 (G4:LiFTSA = 8:10), and then mixed and stirred to obtain a lithium ion conducting material for evaluation.

### 2. Method for evaluating lithium ion conducting material

### 2.1 Evaluation of heat resistance

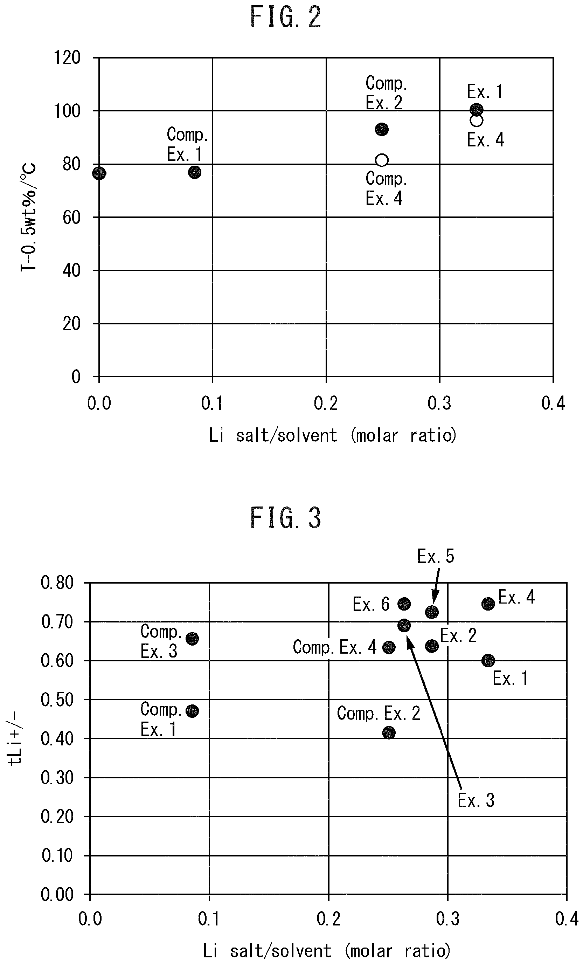

A TG-DTA test was carried out on each lithium ion conducting material at a temperature increase rate of 10 °C/min, and the 0.5 wt% weight-loss temperature (T_{-0.5 wt%}), at which it can be determined that the liquid component has volatilized, was measured. It is considered that the higher the temperature, the more excellent the heat resistance (thermal stability). The results are shown in FIG. 2.

### 2.2 Evaluation of ionic conductivity and lithium ion transference number (tLi⁺)

In a bipolar target cell wherein Li metal is used for the electrodes and the distance between electrodes is fixed, the ionic conductivity is determined by a complex impedance method at 25 °C, and the lithium ion transference number is determined by the Bruce method (Bruce et al. Solid State Ionics 28-30, 1987, 918-922), which combines direct current polarization and impedance methods. The results for the lithium ion transference number are shown in FIG. 3.

### 2.3 Evaluation of lithium ionic conductivity

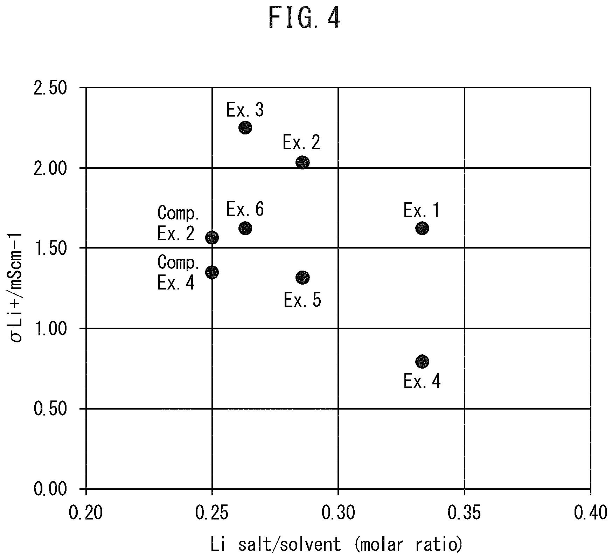

The lithium ion transference number and the ionic conductivity obtained from the above electrochemical method were multiplied by each other to evaluate the lithium ionic conductivity. The results are shown in FIG. 4.

### 2.4 Evaluation of reactivity with sulfide solid electrolyte

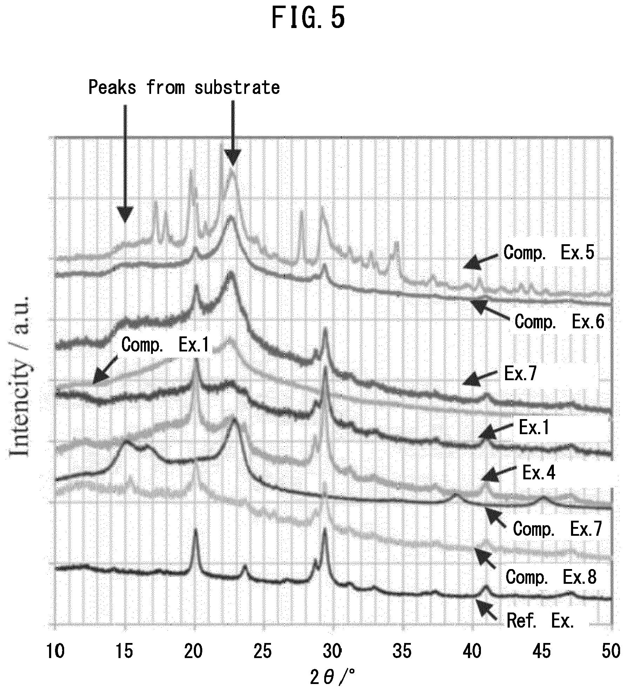

A sulfide solid electrolyte having a composition of 75(75Li₂S·25P₂S₅)·10LiI·15LiBr (numbers in unit of mol%) was immersed in each lithium ion conducting material for 2 months, X-ray diffraction measurements of the sulfide solid electrolyte were taken before and after immersion, and changes in the X-ray diffraction spectrum were confirmed. The results are shown in FIG. 5.

### 3. Evaluation results of lithium ion conducting material

### 3.1 Regarding heat resistance

The following was revealed from the results shown in FIG. 2. When the molar ratio of the lithium salt to the solvent is less than 0.1 as in Comparative Example 1, heat resistance is about the same as when the lithium salt is not included. In other words, the heat resistance improvement effect of dissolving the lithium salt in the solvent cannot be confirmed. When the molar ratio is 0.25 as in Comparative Examples 2 and 4, heat resistance is slightly improved. When the molar ratio is greater than 0.25 as in Examples 1 and 4, heat resistance is remarkably improved.

### 3.2 Regarding lithium ion conductive properties

### 3.2.1 Regarding lithium ion transference number

The following was revealed from the results shown in FIG. 3. In comparison to the cases where the molar ratio of the lithium salt to the solvent is 0.25 or less as in Comparative Examples 1 to 4, when the molar ratio is greater than 0.25 as in Examples 1 to 6, the lithium ion transference number is remarkably increased. On the other hand, as far as the present inventors have confirmed, when the molar ratio of the lithium salt to the solvent is excessive, viscosity becomes too high (for example, becomes solid at room temperature), and lithium ion conductive properties are likely to deteriorate. As long as the molar ratio of the lithium salt to the solvent is greater than 0.25 and 0.33 or less as in Examples 1 to 6, such a problem does not occur.

### 3.2.2 Regarding lithium ionic conductivity

The following was revealed from the results shown in FIG. 4. Normally, as the concentration of lithium salt in the solvent increases, there is a concern that ionic conductivity decreases due to an increase in viscosity. However, in Examples 1 to 6, even as the viscosity increases, the lithium ion transference number described above increases, thereby easily ensuring high lithium ionic conductivity.

As described above, it is considered that the lithium ion conducting materials (Examples 1 to 6) wherein the molar ratio of the lithium amide salt to the cyclic carbonate is greater than 0.25 and 0.33 or less have an excellent balance of heat resistance and lithium ion conductive properties over the lithium ion conducting materials (Comparative Examples 1 to 4) wherein the molar ratio is 0.25 or less. Additionally, as far as the present inventors have confirmed, due to the presence of a large amount of a solvent other than a cyclic carbonate (for example, a chain carbonate) as in Comparative Example 6, the amount of cyclic carbonate is relatively decreased, and as a result, the concentration of Li salt to the cyclic carbonate becomes relatively excessive, whereby heat resistance of the lithium ion conducting material tends to decrease.

### 3.3 Regarding reactivity with sulfide solid electrolyte

The following was revealed from the results shown in FIG. 5. In FIG. 5, the X-ray diffraction peak pattern of the sulfide solid electrolyte after immersion in each lithium ion conducting material for Examples 1, 4, and 7 does not substantially change from that of the sulfide solid electrolyte (Reference Example) before immersion. However, the X-ray diffraction peak pattern of the sulfide solid electrolyte after immersion in each lithium ion conducting material for Comparative Examples 5 to 8 significantly changes from that of the sulfide solid electrolyte (Reference Example) before immersion. From this, it is considered that the reactivity between the lithium ion conducting material and the sulfide solid electrolyte varies depending on the type and polarity of the solvent constituting the lithium ion conducting material and the type of anion in the lithium salt. It is considered that, for example, when a chain carbonate, not a cyclic carbonate, is used as the solvent as in Comparative Example 5, or when a large amount of a chain carbonate is used together with a cyclic carbonate as the solvent (as a result, the molar ratio of the lithium salt to the cyclic carbonate becomes excessive) as in Comparative Example 6, the chain carbonate easily enters into a free state, active sites of the chain carbonate react with the sulfide solid electrolyte, and the sulfide solid electrolyte is altered or deteriorates. The same occurs when G4 is used as the solvent as in Comparative Example 8. Further, it is considered that when LiPF₆, not a lithium amide salt, is used as the lithium salt as in Comparative Example 7, PF₆ anions react with the sulfide solid electrolyte, and the sulfide solid electrolyte is altered or deteriorates.

### 4. Conclusion

From the above results, it is considered that a lithium ion conducting material having the following features (1) and (2) has excellent thermal stability and lithium ion conductive properties.
(1) The lithium ion conducting material comprises a cyclic carbonate as the solvent and a lithium amide salt dissolved in the cyclic carbonate.
(2) The molar ratio of the lithium amide salt to the cyclic carbonate is greater than 0.25 and 0.33 or less.

The lithium ion conducting material having the above features (1) and (2) may comprise a sulfide solid electrolyte, in addition to the cyclic carbonate and the lithium amide salt. Particularly, a lithium ion conducting material having the following feature (3) is considered capable of inhibiting the deterioration of the sulfide solid electrolyte as well as exhibiting the above effect. (3) The lithium amide salt is at least one of lithium bisfluorosulfonylamide and lithium bistrifluoromethanesulfonylamide.

### REFERENCE SIGNS LIST

- 10: positive electrode

- 11: positive electrode active material layer
- 12: positive electrode current collector

- 20: electrolyte layer
- 30: negative electrode

- 31: negative electrode active material layer
- 32: negative electrode current collector

- 100: lithium ion secondary battery

## Claims

1. A lithium ion conducting material, comprising
a cyclic carbonate as a solvent, and
a lithium amide salt dissolved in the cyclic carbonate, wherein
a molar ratio of the lithium amide salt to the cyclic carbonate is greater than 0.25 and 0.33 or less.

2. The lithium ion conducting material according to claim 1, wherein
the cyclic carbonate is at least one of propylene carbonate and ethylene carbonate.

3. The lithium ion conducting material according to claim 1 or 2, wherein
the lithium amide salt is at least one of lithium bisfluorosulfonylamide and lithium bistrifluoromethanesulfonylamide.

4. The lithium ion conducting material according to claim 3, comprising
a sulfide solid electrolyte, in addition to the cyclic carbonate and the lithium amide salt.

5. A lithium ion secondary battery, comprising a positive electrode, an electrolyte layer, and a negative electrode, wherein
at least one of the positive electrode, the electrolyte layer, and the negative electrode comprises the lithium ion conducting material according to any one of claims 1 to 4.
